# EUROPÄISCHE PATENTSCHRIFT

(11) **EP 4 431 774 B1**
(45) Veröffentlichungstag und Bekanntmachung des Hinweises auf die Patenterteilung: **09.12.2026**
(21) Anmeldenummer: 24161146.6
(22) Anmeldetag: 04.03.2024
(51) Int. Cl.: F16K 31/163, F16K 31/53, F15B 15/06

(54) **STELLANTRIEB FÜR EINE ARMATUR**
ACTUATING DRIVE FOR A FITTING
ACTIONNEUR POUR UNE ARMATURE

(30) Priorität: 15.03.2023 DE 202023101293 U
(43) Veröffentlichungstag der Anmeldung: 18.09.2024
(73) Patentinhaber: ROTECH Antriebselemente GmbH, 76275 Ettlingen (DE)
(72) Erfinder: Peters, Heinz, 76275 Ettlingen (DE)
(74) Vertreter: Petersen, Frank

(56) Entgegenhaltungen:
- EP-A1- 0 089 568
- EP-A1- 2 385 284
- BE-A- 864 619
- CN-A- 103 003 609
- DE-A1- 102019 204 446
- DE-A1- 3 443 302
- IT-A1- MI20 092 229
- US-A- 3 246 581

## Beschreibung

Die Erfindung betrifft einen Stellantrieb für eine Armatur gemäß dem Oberbegriff des beigefügten Hauptanspruches.

Armaturen der angesprochenen Art sind beispielsweise offenbart in der US 3 246 581 A; der EP 0 089 568 A1, der DE 10 2019 204 446 A1, der CN 103 003 609 A oder der EP 2 385 284 A1. Sie finden sich in verschiedensten Anlagen, wo mit verstellbaren Querschnittsveränderungen ein Stoffstrom gedrosselt bzw. abgesperrt oder aber vergrößert bzw. vollumfänglich zugelassen werden soll. Dabei werden diese Armaturen, insbesondere in automatisch betriebenen Anlagen, durch den genannten Stellantrieb betätigt, der durch Stellkraft und Stellweg diese Querschnittsveränderung bewirkt.

Bei diesen Druckschriften wird insbesondere unter dem Aspekt einer günstigen Materialkombination innerhalb der Verzahnung vorgeschlagen, dass die Verzahnung an einer Trägerplatte vorgesehen ist, die auswechselbar an der Kolbenstange angebracht ist.

Üblicherweise wird der Stellantrieb auf die Armatur aufgesetzt. Dabei wird über die Stellwelle, die mit einem Wellenzapfen aus dem Stellantrieb herausragt, die Armatur mit dem Stellantrieb verbunden.

Es ist dabei auch bekannt, dass der Stellantrieb mit einem insbesondere pneumatischen doppelt oder einfach wirkenden Zylinder-Kolben-Aggregat als Antrieb versehen ist, wobei die (axiale) Position des Kolbens über ein Getriebe auf die Stellwelle und damit auf die Armatur übertragen wird.

Bei diesem Getriebe handelt es sich im Rahmen der hier vorliegenden Erfindung um einen Schwenkantrieb, wobei die Achse der Stellwelle mit der Schwenkachse der Armatur übereinstimmt.

Durch Verwendung von Schrägverzahnungen zwischen Kolbenstange und Kolben wird bei der Verschiebung der Kolben eine sehr gleichmäßige, insbesondere auch ruckarme Kraftübertragung auf die Stellwelle erreicht, wie sie beispielsweise mit Geradverzahnungen nicht erreichbar ist.

Ein wesentlicher Aspekt bezüglich der Auswahl und Auslegung eines Stellantriebes kann auch dessen Nullstellung sein, die bei einem Ausfall der zum Beispiel pneumatischen oder hydraulischen Ansteuerung auch über eine federbetätigte Verlagerung der Kolben selbsttätig angefahren wird. Je nachdem, ob bei einem derartigen Ausfall der Ansteuerung die Armatur vollständig geöffnet oder aber vollständig geschlossen werden soll, müssen zum Beispiel bei einem Stellantrieb mit zwei gegenläufigen Kolben diese in der Nullstellung soweit wie möglich zusammen- oder aber auseinandergefahren werden bzw. bei einem Stellantrieb mit nur einem Kolben muss dieser in der Nullstellung in seine an die Stellwelle herangerückte oder aber in seine von dieser entfernte Endstellung verbracht werden.

In vergleichbarer Weise kann relevant sein, ob beim Hochfahren einer Anlage und einer dabei bewirkten Druckaufbringung in der Ansteuerung zwei gegenläufige Kolben auseinander- oder zusammengedrückt werden.

Gleichzeitig soll aber die Rotationsrichtung der Stellwelle nicht verändert werden.

Bei Geradverzahnungen ist dies kein Problem. Hier wird lediglich die Kolbenstange auf die andere Seite der Stellwelle versetzt und somit bei unterschiedlicher Richtung der Kolbenbewegung die gleichbleibende Rotationsrichtung der Stellwelle erreicht.

Dies funktioniert aber nicht bei den wegen ihres gleichmäßigen Übertragungsverhaltens bevorzugten Schrägverzahnungen zwischen Kolbenstange und Stellwelle, die deshalb anwendungsbezogen abgeändert werden müssen.

Für die Bereithaltung von Stellantrieben bedeutet dies, dass je nach Anwendungsfall hinsichtlich der Verzahnung zwischen Kolbenstange und Gegenverzahnung unterschiedlich konstruierte Stellantriebe vorzuhalten sind. Insbesondere kommen je nach gewünschter Nullstellung hinsichtlich der an ihnen vorhandenen Schrägverzahnung verschiedene Kolbenstangen zum Einsatz.

Jetzt sind in bekannten Vorrichtungen die erwähnten Kolbenstangen integrierte Bestandteile der Kolben, indem sie bei diesen einstückig angeformte Kolbenhemden bilden. Es sind somit nicht nur unterschiedliche Kolbenstangen herzustellen, sondern unterschiedliche Kolben mit einstückig angeformten Kolbenhemden als Kolbenstangen.

Da derartige Bauteile üblicherweise als Gussteile hergestellt werden, müssen also auch unterschiedliche Gussformen konstruiert und vorgehalten werden.

Insgesamt wird somit also nicht nur die Montage von Stellantrieben aufgrund der größeren Anzahl von möglicherweise verwendbaren Bauelementen komplexer und damit sowohl teurer als auch fehleranfälliger, sondern auch die in deren Vorfeld notwendige Lagerhaltung von verschiedenen Einzelteilen wird aufwendiger und teurer. Und dies betrifft nicht nur die eigentliche Herstellung von entsprechenden Stellantrieben und von deren Einzelteilen, sondern auch die Bevorratung von Ersatzteilen für eine spätere Reparatur des Stellantriebes.

Aufgabe der vorliegenden Erfindung ist es daher einen Stellantrieb der eingangs beschriebenen Art derart weiterzubilden, dass er hinsichtlich dieser aufgezeigten Problematik verbessert wird.

Diese Aufgabe wird erfindungsgemäß gelöst, mit einer Vorrichtung gemäß dem beigefügten Hauptanspruch.

Die Erfindung hat den Vorteil, dass somit grundsätzlich der gleiche Kolben mit als Kolbenhemd integrierter Kolbenstange hergestellt und benutzt werden kann, unabhängig ob der Stellantrieb, in dem dieser Kolben dann verbaut wird, seine Nullstellung mit an der Stellwelle herangerücktem oder von dieser entfernt positioniertem Kolben hat. Je nach Anwendungsfall muss lediglich die Trägerplatte mit der Verzahnung ausgetauscht werden.

Die Trägerplatte ist mit der an ihr vorgesehenen V-förmigen Verzahnung spiegelsymmetrisch ausgebildet und in ihrer Erstreckungsebene um 180° wendbar.

Damit kann ein solcher Kolben mit seiner als Kolbenhemd integrierten Kolbenstange entweder mit der Trägerplatte in einer ersten Position auf der einen Seite der Stellwelle vorbeilaufend montiert werden, in der z.B. eine Nullstellung des Stellantriebes mit von der Stellwelle beabstandetem Kolben vorliegt, oder die Trägerplatte wird in einer zweiten, um 180° gedrehten Position montiert und die Kolbenstange kann dann auf der anderen Seite der Stellwelle vorbeilaufen, um damit eine Nullstellung des Stellantriebes zu ermöglichen mit an die Stellwelle herangerücktem Kolben.

Es ist also grundsätzlich möglich mit denselben Bauteilen entweder einen Stellantrieb zu bauen, bei dem die Nullstellung mit von der Stellwelle beabstandetem Kolben realisiert wird, als auch einen Stellantrieb, bei dem die Nullstellung vorliegt bei einem an die Stellwelle herangerückten Kolben.

Insbesondere vereinfacht sich dadurch auch die Lagerhaltung, sei es bei der Montage eines erfindungsgemäßen Stellantriebes oder auch hinsichtlich eines bedarfsweisen Ersatzes von Bauteilen.

Ein weiterer Vorteil liegt darin, dass ein entsprechender Stellantrieb auch ohne einen Austausch von Bauteilen umgerüstet bzw. umgebaut werden kann.

Bei einer besonders bevorzugten Ausführungsform wird die Trägerplatte durch einen sie übergreifenden Clip in einer mit ihr korrespondierenden Ausnehmung an der Kolbenstange fixiert. Hierdurch erleichtert sich sowohl die Erstmontage als auch ein gegebenenfalls notwendiger Ersatz bei einer Reparatur oder bei einem Umbau, da diese jeweils werkzeuglos erfolgen können.

Diese werkzeuglose Montage wird dadurch besonders unterstützt, dass der angesprochene Clip auch werkzeuglos an der Kolbenstange befestigt werden kann, wofür diese mit wenigstens einer Ausnehmung versehen ist, in die der Clip mit wenigstens einem seiner Enden eingreift.

Bei einer weiter bevorzugten Ausführung der Erfindung erstreckt sich die Verzahnung an der Trägerplatte beidseits eines zur Aufnahme des Clips vorgesehenen verzahnungsfreien Streifens in zwei gegeneinander geneigten Richtungen, so dass sie eine Pfeilverzahnung bildet. Dies hat insbesondere auch Vorteile hinsichtlich des ruck- und stoßfreien Betriebes des Stellantriebes.

Selbstverständlich können die Verzahnungsabschnitte der Schrägverzahnung auch zueinander versetzt angeordnet sein, so dass eine noch gleichmäßigere, stoßfreiere Kraftübertragung möglich ist.

Weitere Vorteile und Merkmale der Erfindung ergeben sich aus der nachfolgenden Beschreibung von Ausführungsbeispielen. Dabei zeigt
- Figur 1: eine Prinzipskizze eines Stellantriebes mit zwei Kolben in perspektivischer Explosionsdarstellung,
- Figur 2: einen für einen Stellantrieb vorgesehenen Kolben mit einer Trägerplatte in einer ersten, montierten Position sowie in einer zweiten gedrehten, für die Montage vorbereiteten Position in perspektivischer Darstellung,
- Figur 3: eine Schnittansicht eines Kolbens gemäß Figur 2 mit einer mittels Gegenhalter befestigten Trägerplatte,
- Figur 4: eine Schnittansicht eines Kolbens gemäß Figur 2 mit einer mittels Clips befestigten Trägerplatte.

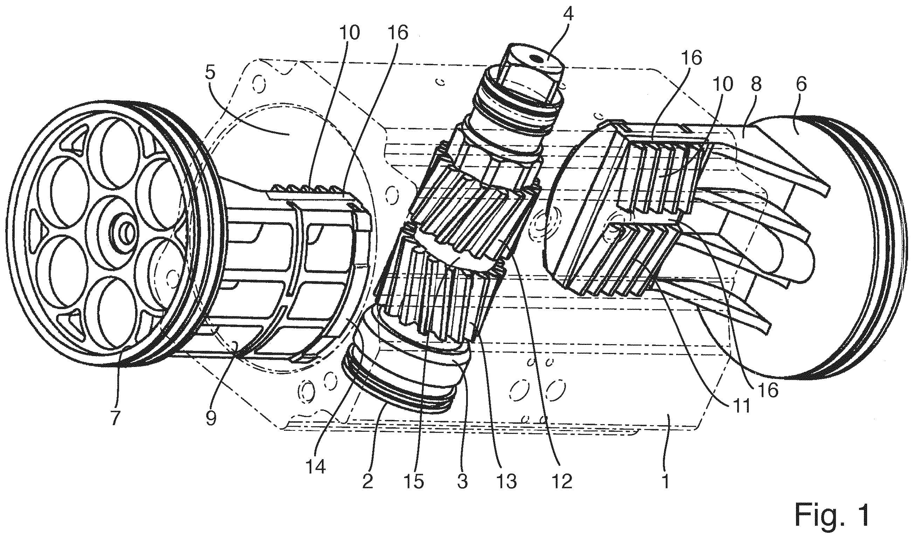

In der Figur 1 erkennt man das Gehäuse 1 eines Stellantriebes. Ein solcher Stellantrieb wird auf eine (nicht dargestellte) Armatur aufgesetzt und ist dabei über den Wellenzapfen 2 einer Stellwelle 3 an das Schließelement einer Armatur angekoppelt. Dieses Schließelement, z. B. ein Klappenventil oder aber ein Kugelventil, wird über diese Stellwelle verschwenkt und führt so innerhalb der Armatur zu einer Querschnittsveränderung, wodurch ein Stoffstrom gedrosselt bzw. abgesperrt oder aber vergrößert bzw. vollständig zugelassen wird.

Dem Wellenzapfen 2 gegenüber ist die Stellwelle 3 an ihrem anderen Ende mit einem Mehrkant 4 versehen. Mit diesem Mehrkant 4 ragt sie ebenfalls aus dem Gehäuse 1 heraus. An diesem Mehrkant 4 kann ein Positionsgeber angekoppelt werden, über den die Position des Schließelementes innerhalb der Armatur erfasst wird. Diese Position kann dann entweder direkt am Positionsgeber oder aber mit einer Fernanzeige angezeigt werden.

Innerhalb des Gehäuses 1 weist der hier dargestellte Stellantrieb eine Zylinderbohrung 5 auf mit kreisförmigem Querschnitt. In dieser Zylinderbohrung 5 sind zwei Kolben 6, 7 verschiebbar. Hierzu wird entweder der zwischen den Kolben 6, 7 liegende Raum vorzugsweise pneumatisch mit Druck beaufschlagt, wodurch die beiden Kolben 6, 7 auseinandergetrieben werden, oder aber die außerhalb der Kolben liegenden Räume innerhalb der Zylinderbohrung 5 werden mit Druck beaufschlagt, wodurch die beiden Kolben 6, 7 aufeinander zu bewegt werden. Die außerhalb der Kolben liegenden Räume werden durch hier nicht dargestellte Deckel begrenzt, die die Zylinderbohrung 5 an ihren Enden verschließen.

Die beiden Kolben können beispielsweise bei einem Ausfall der Ansteuerung auch durch hier nicht dargestellte insbesondere Schraubenfedern entweder in ihre auseinander- oder aber in ihre zusammenliegenden Endpositionen gedrückt werden.

Bei den beschriebenen Bewegungen greifen die Kolben 6, 7 über einstückig in der Form von sogenannten Kolbenhemden an ihnen angeformte Kolbenstangen 8, 9 an der Stellwelle 3 an. Dabei kämmen an den Kolbenstangen 8, 9 befindliche Verzahnungen 10, 11, die an einer separaten Trägerplatten 16 vorgesehen sind, mit korrespondierenden Verzahnungsabschnitten 12, 13 an der Stellwelle 3. Die Verzahnungen 10, 11 an den Trägerplatten 16, die sich an den Kolbenstangen 8 bzw. 9 befinden, und die Verzahnungsabschnitte 12, 13 an der Stellwelle 3 sind jeweils als Schrägverzahnungen ausgeführt und haben eine Neigung gegenüber der Bewegungsrichtung der Kolben 6 bzw. 7.

Durch Verwendung von Schrägverzahnungen wird bei der Verschiebung der Kolben 6, 7 eine sehr gleichmäßige Kraftübertragung auf die Stellwelle 3 erreicht, die sich damit ohne als nachteilig empfundene Ruckelbewegungen drehen kann. Solche Ruckelbewegungen können in den Leitungen, die durch eine Armatur geöffnet oder geschlossen werden, zu unerwünschten Schwingungen führen.

Im hier dargestellten Beispiel sind die Verzahnungen der mehreren Verzahnungsabschnitte 10, 11 an den Trägerplatten 16 gegeneinander geneigt. Hierdurch werden auch von den Schrägverzahnungen auf die Stellwelle 3 ausgeübte, in deren Axialrichtung gerichtete Querkräfte gegeneinander aufgehoben und die Lager für die Stellwelle 3 müssen keine separate Axialabstützung zur Aufnahme dieser Querkräfte aufweisen.

Durch das Vorsehen dieser auch als "Pfeilverzahnung" bezeichneten Schrägverzahnung mit zwei gegeneinander geneigten Verzahnungsabschnitten werden auch die Kolbenstangen 8, 9 bei ihrem Vorbeilaufen an der Stellwelle 3 geführt. Die Kolben 6, 7 können damit innerhalb der Zylinderbohrung 5 auch nicht mehr leicht kippen, da sie einstückig mit den Kolbenstangen 8, 9 hergestellt sind.

Gleichzeitig werden die halbrunden Anlageflächen 14, die an dem Ende der Kolbenhemden bzw. Kolbenstangen 8, 9 vorhanden sind, die dem Kolben abgewandt sind und mit denen die Kolbenhemden bzw. Kolbenstangen 8, 9 an der Wandung der Zylinderbohrung 5 entlanggleiten, von ihren bisherigen entsprechenden Führungsfunktionen für die Kolbenstangen 9 entlastet. Die Anlageflächen 14 müssen somit nicht mehr hochpräzise ausgeführt werden. Hierdurch sind die Kolben und die einstückig an ihnen befindlichen Kolbenstangen auch preiswerter herstellbar.

Ein besonderes Problem ist der Einsatz entsprechender Stellantriebe bei unterschiedlichen Null- oder Ausgangsstellungen der zu steuernden Armaturen. Die Betätigung der Armatur erfolgt dabei immer durch eine Drehung der Stellwelle in der gleichen Richtung, aber dies ist verbunden mit jeweils anderen Kolbenbewegungen.

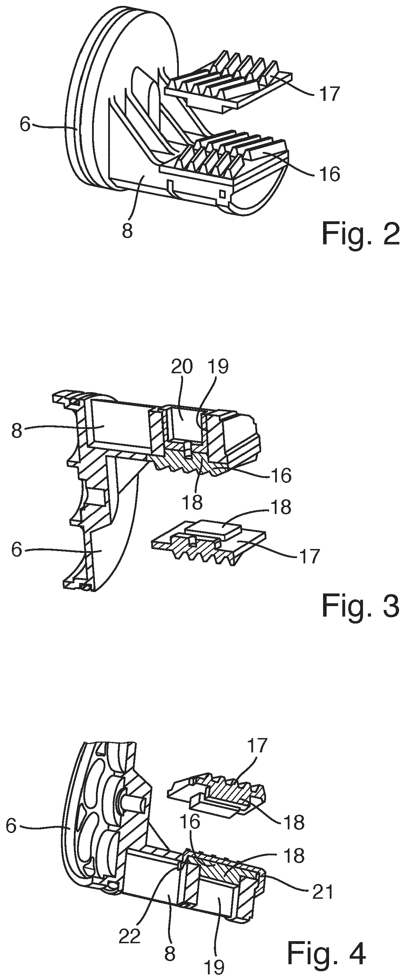

Um dabei dieselben Kolben benutzen zu können, sind die Verzahnungen 10, 11, wie erläutert an Trägerplatten 16 vorgesehen und diese Trägerplatten 16 sind so ausgestaltet, dass sie in ihrer Erstreckungsebene um 180° wendbar sind, wie dies in der Figur 2 dargestellt ist.

Man erkennt einen Kolben 6 mit einem einstückig daran angeformten Kolbenhemd, das als Kolbenstange 8 dient. In der Figur 1 ist dargestellt, wie der Kolben in den Stellantrieb eingebaut ist mit diesem als Kolbenstange 8 fungierenden Kolbenhemd an einer ersten Seite der Stellwelle 3 vorbeilaufend.

In der Figur 2 ist dieser Kolben 6 in einer aus dem Stellantrieb herausgenommenen Zustand dargestellt und man erkennt die am Ende des Kolbenhemdes bzw. der Kolbenstange 8 befestigte Trägerplatte 16. Diese kann von der Kolbenstange 8 gelöst werden. Dann wird sie in ihrer Erstreckungsebene um 180° rotiert, so dass sie in eine Stellung gelangt, wie sie mit dem Bezugszeichen 17 in der Figur 2 dargestellt ist. In dieser Stellung wird sie dann an die in der Figur 2 mit dem Bezugszeichen 16 bezeichneten ursprünglichen Position wieder an der Kolbenstange 8 befestigt.

Der Kolben kann dann um 180° um seine Längs- bzw. Erstreckungsachse rotiert werden und wird abschließend wieder mit seinem Kolbenhemd bzw. seiner Kolbenstange 8 in den Stellantrieb eingebaut, wobei dann allerdings die Kolbenstange 8 auf der anderen Seite der Stellwelle 3 vorbeiläuft.

Damit wird bei gleichbleibender Bewegung des Kolbens 6 die von diesem bewirkte Rotation der Stellwelle 3 in ihrer Richtung umgekehrt.

In der Figur 3 ist zu erkennen, dass die Trägerplatte 16 an ihrer Unterseite einen Vorsprung 18 aufweist, mit dem sie in eine korrespondierende Aufnahmeöffnung 19 an der Kolbenstange 8 eingesetzt wird. In dieser Position wird sie dann durch einen Gegenhalter 20 fixiert und gehalten, der aus der anderen Richtung in die Aufnahmeöffnung 19 eingesetzt wird.

Statt einem entsprechenden Gegenhalter 20 kann wie in Figur 4 dargestellt die Trägerplatte 16 auch von einem sie überspannenden Clip 21 in der Aufnahmeöffnung 19 gehalten werden. Dieser Clip kann dabei in entsprechende Ausnehmungen am Kolben eingreifen oder mit Ausnehmungen versehen sein, um an dem Kolben entsprechend einrasten zu können. Ein derartiger Clip 20 verläuft dabei mittig zwischen den Verzahnungsabschnitten 10, 11 an der Oberseite der Trägerplatte 16, sodass er in eingebautem Zustand des Kolbens 6 auf der Gegenseite in einer Lücke 15 zwischen den Gegenverzahnungen 12,13 an der Stellwelle 3 zu liegen kommt.

Durch diese Ausführungsform ist eine nicht nur sehr kompakte, sondern gegebenenfalls auch werkzeuglos mittels Verdrehung der Trägerplatte 16 zu verändernde Verzahnung am Kolben 6 zu erreichen.

### Bezugszeichenliste

- 1: Gehäuse
- 2: Wellenzapfen
- 3: Stellwelle
- 4: Mehrkant
- 5: Zylinderbohrung
- 6: Kolben
- 7: Kolben
- 8: Kolbenstange
- 9: Kolbenstange
- 10: Verzahnung
- 11: Verzahnung
- 12: Verzahnungsabschnitt
- 13: Verzahnungsabschnitt
- 14: Anlagefläche
- 15: Lücke
- 16: Trägerplatte
- 17: Trägerplatte (in gedrehter Position)
- 18: Vorsprung
- 19: Aufnahmeöffnung
- 20: Gegenhalter
- 21: Clip
- 22: Ausnehmungen

## Patentansprüche

1. Stellantrieb für eine Armatur, mit wenigstens einem Kolben (6, 7) der über eine Verzahnung (10, 11) an einer ihm zugeordneten Kolbenstange (8, 9) auf eine mit einer Gegenverzahnung (12, 13) versehene, um eine Achse drehende Stellwelle (3) wirkt,
wobei die Verzahnung (10, 11) an einer Trägerplatte (16, 17) ist, die auswechselbar an der Kolbenstange (8, 9) angebracht ist,
**dadurch gekennzeichnet,**
**dass** die Verzahnung eine V-förmige Verzahnung ist und die Trägerplatte (16, 17) spiegelsymmetrisch und in ihrer Erstreckungsebene um 180° rotierbar ist.

2. Stellantrieb gemäß Anspruch 1,
**dadurch gekennzeichnet,**
**dass** die Trägerplatte (16, 17) durch einen sie übergreifenden Clip (21) in einer Aufnahmeöffnung (19) an der Kolbenstange (8, 9) fixiert ist.

3. Stellantrieb gemäß Anspruch 1,
**dadurch gekennzeichnet,**
**dass** die Trägerplatte (16, 17) durch einen Gegenhalter (20) in einer Aufnahmeöffnung (19) an der Kolbenstange (8,9) fixiert ist.

## Claims

1. Actuator for a fitting, having at least one piston (6, 7) which acts via a toothing (10, 11) on a piston rod (8, 9), which is assigned thereto, on an actuating shaft (3), which is provided with a mating toothing (12, 13) and rotates about an axis,
the toothing (10, 11) being on a carrier plate (16, 17) which is replaceably attached to the piston rod (8, 9),
**characterized in that**
the toothing is a V-shaped toothing and the carrier plate (16, 17) is mirror-symmetrical and rotatable in its plane of extent by 180°.

2. Actuator according to Claim 1,
**characterized in that**
the carrier plate (16, 17) is fixed to the piston rod (8, 9) in a receiving opening (19) by a clip (21) overlapping said carrier plate.

3. Actuator according to Claim 1,
**characterized in that**
the carrier plate (16, 17) is fixed to the piston rod (8, 9) in a receiving opening (19) by a counter-holder (20).

## Revendications

1. Actionneur pour une garniture, avec au moins un piston (6, 7), qui agit, par une denture (10, 11) sur une tige de piston (8, 9) qui lui est associée, sur un arbre d'actionnement (3) pourvu d'une contre-denture (12, 13), tournant autour d'un axe,
la denture (10, 11) se trouvant sur une plaque de support (16, 17) qui est installée de manière interchangeable sur la tige de piston (8, 9),
**caractérisé en ce que**
la denture est une denture en forme de V et la plaque de support (16, 17) est symétrique en miroir et peut tourner de 180° dans son plan d'extension.

2. Actionneur selon la revendication 1,
**caractérisé en ce que**
la plaque de support (16, 17) est fixée par un clip (21) la chevauchant dans une ouverture de réception (19) sur la tige de piston (8, 9).

3. Actionneur selon la revendication 1,
**caractérisé en ce que**
la plaque de support (16, 17) est fixée sur la tige de piston (8, 9) par une contre-bouterolle (20) dans une ouverture de réception (19).
